## Europäisches Patentamt

## European Patent Office

## Office européen des brevets

(11) Publication number: **0 133 611 B1**

(12) **EUROPEAN PATENT SPECIFICATION**

(45) Date of publication of patent specification: **30.09.87**

(51) Int. Cl.⁴: $B\ 32\ B\ 27/30$, $B\ 32\ B\ 17/12$

(21) Application number: **84870116.5**

(22) Date of filing: **10.08.84**

(54) Laminates comprising plasticized polyvinyl butyral interlayers.

(30) Priority: **12.08.83 US 522929**
**07.12.83 US 559069**
**15.08.83 US 523305**

(43) Date of publication of application:
**27.02.85 Bulletin 85/09**

(45) Publication of the grant of the patent:
**30.09.87 Bulletin 87/40**

(84) Designated Contracting States:
**BE DE FR GB IT**

(56) References cited:
**US-A-2 433 097**
**US-A-4 128 694**

(73) Proprietor: **MONSANTO COMPANY**
**Patent Department 800 North Lindbergh Boulevard**
**St. Louis, Missouri 63166 (US)**

(72) Inventor: **Gomez, Ildefonso Luis**
**223 Franklin Road**
**Longmeadow Massachusetts 01106 (US)**

(74) Representative: **McLean, Peter et al**
**Monsanto Europe S.A. Patent Department**
**Avenue de Tervuren 270-272 Letter Box No 1**
**B-1150 Brussels (BE)**

Courier Press, Leamington Spa, England.

**Description**

Background of the invention

This invention relates to polyvinyl butyral (PVB) sheet plasticized with fatty acid esters and more particularly with a fatty acid ester blend which provides the sheet with improved penetration resistance without significant loss in its resistance to stress cracking polycarbonate or polyacrylate when in contact therewith as an interlayer in a laminated glass assembly. It also relates to such assemblies which exhibit decreased delamination of the PVB on impact at very low temperatures.

In recent years sociologists and psychologists have started a movement toward prisons without bars. Thick layers of impact resistant polycarbonate initially used in such applications were quite early determined to be inadequate since the polycarbonate could be burned or scratched or dissolved or fractured when heated or abused. Moreover, when exposed to the elements the polycarbonate turned yellow, lost its strength and was susceptible to crazing. Based on this early work a need was defined for a material for security applications which was strong, chemically impervious, and scratch and fracture resistant over a wide range of ambient conditions.

Thereafter laminates of one or more layers of glass with one or more layers of polycarbonate were proposed which in use were mounted with the glass layer on the outside exposed to the elements and the polycarbonate either forming the innermost surface or positioned inboard of a glass layer forming such innermost surface. However, with these laminates an interlayer between the glass and polycarbonate is necessary since polycarbonate will not adequately adhere to glass.

Thermoplastic polyurethane layers have been used to laminate polycarbonate to glass but polyurethanes are costly. Commercially available grades of PVB sheet are not acceptable as an interlayer to adhere polycarbonate to glass because the plasticizer in the PVB crazes the polycarbonate. To solve this a special barrier coating, as disclosed in U.S. 4,243,719, was proposed between the polycarbonate and PVB to keep the plasticizer in the PVB away from the polycarbonate. The PVB is still necessary since the coating will not adhere to the glass and the PVB assists in absorbing energy on impacting. Such a coating must be pinhole-free for obvious reasons and moreover is costly in that it represents an additional layer in an already multi-layered laminate which could be avoided if a plasticizer for PVB were available which did not craze the polycarbonate.

Sulfonamide and phosphate plasticizers for PVB which do not attack polycarbonate are disclosed in U.S. 3,539,442 and 3,406,086 respectively but PVB containing such plasticizers can only be difficultly extruded in forming sheet since they tend to decompose at extrusion conditions and degrade the PVB.

Certain esters which in natural form can be the major constituents of castor oil are proposed in U.S. 4,128,694 as plasticizers for PVB which neither craze polycarbonate or polyacrylate nor deteriorate during extrusion of plasticizer PVB. However, such interlayers exhibit relatively high glass transition temperatures (Tg) at the usual plasticizer loadings and marginal peel adhesion to polycarbonate which means the impact properties at low performance temperatures are also marginal. This has precluded the use of such interlayers in security glass applications exposed to cold climates.

A need, therefore, exists in the art for a plasticized PVB sheet having the properties of those disclosed in U.S. 4,128,694, but which has a low Tg and higher peel adhesion and therefore improved low temperature performance properties when present as a functional PVB interlayer in a security glass laminate. Higher peel adhesion (i.e. equal to or greater than 10 newtons per cm) is needed to maintain laminate integrity during and after laminate impacting. However, very high peel adhesion (i.e. equal to greater than 30 newtons per cm) can produce laminate failure due to breakthrough when the laminate is impacted. On the other hand, very low peel adhesion (i.e. less than 10 newtons per cm) can produce delamination on impacting, e.g. along the laminate edges.

However, when such laminates are exposed to very low temperatures on the order of minus 10°C the interface between the PVB and polycarbonate or polyacrylate is sufficiently weakened that on impact some delamination of the PVB from the polycarbonate or polyacrylate can be detected. Low temperature delamination is preferably avoided since it adversely affects panel integrity and consequently the degree of safety provided when used in a multilayered security panel.

A further need, therefore, exists in the art for a precursor laminate containing plasticized PVB sheet and polycarbonate or polyacrylate which is usable with glass in laminated security glass applications which exhibits little or no delamination during impact at very low temperatures on the order of minus 10°C.

Summary of the invention

Now improvements have been developed which overcome the aforementioned deficiencies and satisfy the needs of the prior art.

Accordingly, it is a principal object of this invention to provide a laminate of plasticized PVB in adherent contact with polycarbonate or polyacrylate which has improved peel adhesion and high penetration resistance at low temperatures.

A further object is to provide a laminate of plasticized PVB secured to polycarbonate (PC) or polyacrylate (PA) which exhibits significantly increased delamination resistance on impact at very low temperatures on the order of minus 10°C.

Another object is to provide improvements in such a laminate via a special flexible coating which improves the bond between PVB and PC or PA at such very low temperatures.

Other objects of this invention will in part be obvious and will in part appear from the following description and claims.

The principal object is accomplished in a laminate comprising at least one sheet of thermoplastic resin selected from the group consisting of polycarbonate and polyacrylate laminated to PVB sheet plasticized with a multiester of an alcohol having 2 to 4 hydroxyl groups and a $C_{16}$ to $C_{20}$ unsaturated fatty acid having a hydroxyl group attached to the acid molecule by providing the improvement which comprises, in property-improving combination with such multiester, a synergistically effective amount of an additional plasticizer in said PVB sheet which is a monoester of a glycol and such $C_{16}$ to $C_{20}$ unsaturated fatty acid. The monoester is preferably propylene 1,2 glycol partially esterified with ricinoleic acid.

A preferred laminate according to the invention is one wherein a layer of poly-vinylidene chloride or cured urethene acrylate resin is interposed between the interfacial surfaces of the polycarbonate or polyacrylate and the PVB sheets for bonding the sheets together and resisting delamination on impact at temperatures at least as low as minus 10°C.

Description of preferred embodiments

US—A—4,128,694 discloses a plasticizer for PVB resin in the form of a specific fatty acid multiester of an alcohol having 2 to 4 hydroxyl groups and a $C_{16}$ to $C_{20}$ unsaturated fatty acid having a hydroxyl group attached to the acid molecule. The term "multiester" as used herein means an ester formed by esterifying more than one hydroxyl group of such an alcohol with such an acid. Such plasticizer in a PVB interlayer does not attack polycarbonate or polyacrylate when present in a multiple panel safety or security glass laminate assembly. In the present invention, a monoester species of such specific fatty acid multiester is combined with the latter to form a plasticizer blend for PVB which unexpectedly lowers the Tg of PVB plasticized therewith and incrementally improves the PVB interlayer penetration resistance and peel adhesion to polycarbonate over that obtained using the fatty acid multiester alone. Performance with polyacrylate is predicted to be similar. The plasticizer blend of the present invention, therefore, comprises a multiester component (e.g. a triester) combined with a monoester glycol component, each component being derivable from the same class of unsaturated fatty acids.

The preferred multiester component of the plasticizer blend of the present invention is contained in castor oil which is a triglyceride ester of fatty acids. It comprises a mixture of esters of glycerol with the following acids, (the figure in parentheses being the approximate weight percent of esters formed from that acid): ricinoleic acid (89.5%), oleic acid (3.0%), linoleic acid (4.2%), stearic acid 1% and dihydroxystearic acid. Approximately 63.6% of the ricinoleate is triester, (glycerol triricinoleate) 31.1% diester and 5.1% the monoester. The latter level of monoester in castor oil is insufficient in itself to provide the improvement of the present invention. Other multiesters found useful wherein one molecule of the esterifying acid has reacted with each available hydroxyl of the alcohol are those based on triethylene glycol, trimethylol propane and pentaerythritol.

The unsaturated fatty acid monoester found synergistically effective as an additional plasticizer in combination with the preferred castor oil in PVB sheet in property improving combination in a blend with the multiester referred to above is a monoester of a glycol and a $C_{16}$ to $C_{20}$ unsaturated fatty acid having a hydroxyl group attached to· the acid molecule. The preferred monoester is propylene glycol 1,2 monoricinoleate. Though not certain of the reason, it appears that the unreacted hydroxyl group immediately adjacent the acid linkage in the monoester plays an important function in the plasticizer blend insofar as improving the peel adhesion to polycarbonate or polyacrylate of PVB interlayer plasticized therewith, as well as the penetration resistance of glass laminates made up of layers of these materials.

The acids that may be used to form the multiester and monoester plasticizer components of the blend of the present invention have from 16 to 20 carbon atoms and include in addition to ricinoleic acid, (12-hydroxyoleic acid) other hydroxy-oleic acids with the hydroxyl group located other than on the "12" carbon atom such as 6-, 8-, 14-, or 16-hydroxy-oleic acid, 12-hydroxyelaidic acid and acids with the same empirical formula with the hydroxyl located on other than the "12" atom. Also included are the corresponding variations of 12-hydroxy-hexadec-9-enoic acid and 12-hydroxy-eicos-9-enoic acid.

A single acid may provide all the esterifying acid groups but usually a mixture of unsaturated esterifying acids, are used, provided that the esterifying acids together provide at least one unsaturation and one hydroxyl group per molecule of plasticizer.

The amount of plasticizer blend to be used in the laminate interlayer of the invention should preferably be from 10 to 55 parts per hundred parts of PVB resin (phr). The more preferred amount is 20 to 50 phr, and particularly preferred is 30 to 40 phr.

The weight proportion of monoester to multiester in the plasticizer blend should preferably be from about 1:1 to about 5:1. When castor oil is used as the multiester, allowance may optionally be made for the minor level of monoester therein in determining the total amount of monoester to be used in the blend. It is preferred that the monoester be present as the major constituent of the plasticizer blend, i.e. present in amount greater than the multiester. The most preferred proportion of monoester to multiester is 2:1.

The monoesters of the present invention are commercially available from CasChem Inc., Bayonne,

3

New Jersey, 07002 under the registered trademark Flexricin. The various grades of each used in the Examples following are identified in the footnotes to Table 1.

In general, the polyvinyl butyral resin employed may be considered to be made up, on a weight basis, of from 5 to 25 percent hydroxyl groups, calculated as polyvinyl alcohol, 0 to 4 percent acetate groups, calculated as polyvinyl acetate, and the balance substantially butyral. The resin will preferably contain, on a weight basis, from 10 to 25 percent hydroxyl groups, calculated as polyvinyl alcohol and from 0 to 10 percent acetate groups, calculated as polyvinyl acetate, the balance being substantially butyraldehyde acetal.

The polycarbonate component may be any suitable sheet of polycarbonate such as disclosed in U.S. Patent Nos. 3,028,365 and 3,117,019 and is preferably prepared by reacting di(monohydroxyaryl)alkanes with derivatives of carbonic acid such as phosgene and bischloro-carbonic acid esters of di(monohydroxy-aryl)alkanes. Commercial polycarbonate sheeting is available from General Electric Company under the trademark Lexan.

Where the resin sheet is a polyacrylate this may be as an ester of a lower aliphatic alcohol, such as butyl-, propyl-, ethyl-, or methyl alcohol and acrylic-, methacrylic-, ethacrylic-, propacrylic- or butacrylic-acid. By far the most convenient is polymethyl methacrylate.

The polyvinylidene chloride or urethane acrylate flexible coatings of the preferred embodiment of the present invention are hydrophobic and adhere well to PC or PA as well as plasticized PVB at very low temperatures and are capable of surviving the pressure and temperature conditions without melting or softening to which the laminate is subsequently exposed in preparing the final multi-ply assembly with glass.

The urethane acrylate composition for coating polycarbonate or polyacrylate is a reactive, viscous liquid mixture of (a) general purpose, non-yellowing, urethane-based oligomers as the major component and (b) one or more reactive monomers which serve as crosslinking agent(s) and to introduce acrylate functionality into the coating composition. The liquid coating mixture polymerizes and cures under the influence of high intensity radiation from electron beam and/or ultra-violet (UV) sources to a flexible, crosslinked, thermoset coating structure. Optionally usable in the liquid mixture which will form the cured coating are flow control additives and, especially when curing by UV radiation, a photoinitiator is included. The preferred curing is by electron beam since a photoinitiator is then not required and consequently photoinitiator residues in the cured coating are avoided. The resistance to outdoor UV exposure of the multi-layered panel is impaired by the presence of such photoinitiator residues.

In general the urethane oligomers component (a) of the coating composition can broadly be described as the reaction product of a difunctional polyol and an aromatic or aliphatic diisocyanate. Aliphatic diisocyanate is preferred to give optimum stability of the cured coating against degradation from ultra-violet exposure. Instead of providing acrylate functionality in the system via the reactive monomers of component (b) this can be alternately achieved during synthesis of the urethane oligomer, for example by using a diisocyanate tipped with vinyl acrylate.

Usable reactive monomers as component (b) in the urethane acrylate coating composition comprise vinyl pyrrolidone and acrylic monomers. The vinyl pyrrolidone can also function to increase the hardness of the cured coating and/or reduce the viscosity of the precursor liquid mixture for better processability. The presence of the acrylate radical in the cured coating imparts abrasion resistance which is desirable since lamination of the coated polycarbonate or polyacrylate to other components of the multi-layered assembly frequently occurs in a different location from where the coating is applied and it is important that the coating resist scratching during handling between assembly stations. Acrylate also promotes clarity and may improve weatherability of the cured coating in terms of resistance to UV degradation. Usable acrylic monomers comprise tetraethylene glycol diacrylate, ethoxyethoxy-ethyl acrylate, 2-ethylhexyl acrylate, 2-hydroxyethyl acrylate, 2-phenoxyethyl acrylate and mixtures thereof. A suitable photoinitiator is 2,2'-diethoxyacetophenone. DC-193, a silicone surfactant from Dow Corning, represents a usable flow control additive.

The urethane acrylate coating composition should comprise from about 70 to 90 parts by weight of (a) and about 10 to 30 parts of (b). When photoinitiator and flow control additives are used, they should be present at 1 to 2 and about 0.3 parts respectively per 100 parts of (a) and (b).

Commercially available urethane based oligomers operable in formulations usable in the invention can be obtained from GAF Corp., New York, N.Y. as Gafgard 238 or 233 and from Thiokol Specialty Chemicals Division, Trenton, N.J. as Uvithane 783 or 893. A particularly suitable formulation is a blend of a) 70 wt. % Uvithane 783 urethane-based oligomer, b) 15 wt. % RC-20, a registered trademark of Thiokol Corp. denoting ethoxyethoxyethyl acrylate, c) 15 wt. % V-Pyrol from GAF Corp. which is vinyl-pyrrolidone, and two parts per 100 parts of a), b) and c) of diethoxyacetophenone photoinitiator, available from Upjohn Co..

The urethane acrylate liquid coating composition should be applied to the interfacial surface of the PVB and PC or PA by brushing, spraying or roll coating onto the surface of washed PC or PA prior to lamination. The liquid mixture is then cured by exposure, preferably in a nitrogen atmosphere, to a conventional source of high energy ionizing radiation generated by an electron beam generator machine, such as a Dynamatron made by Radiation Dynamics, Inc. Dosage should be on the order of about 3 megarads. Alternatively, curing can be by exposure to ultraviolet radiation such as by passage through a housing having plural banks of ultraviolet light emitting lamps.

The polyvinylidene chloride (PVDC) coating embodiment of the invention should be applied as an emulsion of PVDC in water by the same application techniques described above for the urethane acrylate coating. Curing is in ambient air or at elevated temperatures (e.g. 38—66°C). A usable PVDC emulsion coating is available as Daran 820 from W. R. Grace and Co., Organic Chemicals Division. This is a 50% emulsion of PVDC having a pH of about 1.5 to 2.5 and a particle size of 0.08 to 0.12 micrometers.

The thickness of the urethane acrylate or PVDC coating after curing will vary between about 0.013 to 0.13 mm and will depend on the method of application. Spraying produces the preferred thickness of between 0.025 to 0.075 mm. The cured film coating which must be transparent should have the following desirable properties: (1) a glass transition temperature (Tg) of 15°C or less and (2) at least 30% elongation at fail. Tg of the cured coating film can be obtained by applying a coating of the material on wax paper and then removing the latter and measuring Tg using a Rheometric Mechanical Spectrometer which is a rectangular torsion test conducted in a nitrogen atmosphere at a constant frequency (1 hertz) and temperature. Alternatively, and especially useful for measuring Tg of thin films, a Rheovibron manufactured by Tayo Instrument of Japan can be used. Percent elongation at fail is measured according to D882-80.

The plasticized interlayer of the invention can be used to make a simple laminate with the interlayer in contact on at least one surface with a polycarbonate or a polyacrylate sheet. Usually one of the surfaces of the interlayer will be in contact with a different material such as glass.

For security glass it is usual to provide multiple layers, such as four or more, comprising plasticized interlayers and polycarbonate or polyacrylate layers and glass layers laminated together to form laminates of from 1/2 inch up to several inches in thickness (1 inch=2.54 cm). For such purposes the construction usually comprises glass/interlayer/polycarbonate or polyacrylate/interlayer/glass units multiplied as appropriate. In the additional embodiment embracing the cured urethane acrylate or PVDC film coating applied to the interfacial surface of the PC or PA and the PVB sheeting, after coating the sheets are assembled for lamination. In the lamination process, the sheets are initially sandwiched between two rigid pressing plies such as glass sheets and the preassembled laminate is then successively subjected to heat and pressure sufficient to facilitate air removal and hold the plies of the laminate together. Alternatively, vacuum bagging for about twenty hours can be used to achieve equivalent results. With this approach the pre-assembled laminate is bagged in a plastic film, such as of polyethylene terephthalate, the bag sealed with tape through which extends a hollow access tube by means of which negative pressure is imposed on the interior of the bag containing the assembly.

Final lamination is usually conducted in an oil or, preferably, an air autoclave or other suitable high pressure equipment where care must be taken to protect the cured coating. Generally speaking, the laminate is heated to a temperature of about 93 to 116°C at a pressure of not more than about 1000 kPa for about 60 to 90 minutes to laminate the sandwich. The temperature of the air is then reduced, the pressure is released and the sandwich removed from the autoclave, cleaned and made ready for use or shipment.

In the preferred embodiment the construction usually comprises glass/interlayer/coated polycarbonate or polyacrylate (both sides)/interlayer/glass units again multiplied as appropriate.

The laminates produced using the plasticized interlayer of the invention may be treated to reduce light transmission by tinting one or more of the component layers or by supplying a metallized surface to one or more of the layers. The treatment can be such as to produce a uniform reduction in light transmission over the whole sheet or perhaps in the form of a band or other form of localized effect.

Laminates formed according to the present invention are broadly useful in any application requiring a safety glass assembly such as in vehicular windshields, but are especially useful in security applications such as prisons without bars and installations requiring a somewhat lesser degree of security such as bank windows, cashier booths, jewelry counters and the like. Applications in which the laminates of the invention can be used are disclosed in US—A—4,243,719, col. 10, line 3 through col. 12, line 36.

In addition to the plasticizers, the interlayers of the present invention may contain other additives such as dyes, ultraviolet light stabilizers, salts to control adhesion and antioxidants and may, if desired, be treated with additives to improve laminating efficiency.

The invention is further described with reference to the following examples which are for illustration only and are not intended to imply any limitation or restriction on the invention.

Examples 1—9

Laminates of uncoated, general purpose high impact, glazing grade, polycarbonate (Lexan® 9030) and PVB sheet were made using various plasticizers according to the following procedure.

The PVB used contained 18 weight percent hydroxyl groups (measured as polyvinyl alcohol) and had a solution viscosity of .23—.25 Pa · s as determined by Kinematic Viscometer, Cannon Fenske type (ASTM D-4445). The plasticizer(s) was added to the PVB resin and mixed either manually or with a low intensity laboratory mixer and allowed to sit overnight to promote absorption of the plasticizer by the resin. A sigma blade mixer with steam for heating passing through the mixer jacket was then used for about ten minutes to melt and mix the resin and plasticizer and form molten crumbs of plasticized PVB.

The crumbs of plasticized PVB were deposited in a frame and pressed into blocks 35.5 cm by 40.6 cm of about 5 cm thickness. Slices of plasticized interlayer of about 0.75 mm thickness were cut from these blocks and separated from each other via interposed plastic film, conditioned for about one hour at 20 to 35% relative humidity to control moisture level therein at 0.4 to 0.5 weight %.

Initially washed polycarbonate (0.32 cm to 0.62 cm thickness) sheets and layers of commercially available float glass were used in assembling each laminate as follows: a slice of plasticized interlayer was placed on either side of the polycarbonate layer and then a layer of glass placed against each layer of interlayer. The loosely assembled laminate was pre-compressed at about 4.476 MPa (46.7 kg/cm$^2$) at temperatures of 100°C—215°C in conventional manner using a heated press, then air-autoclaved at 93°C, .343 MPa (3.5 kg/cm$^2$) for one hour 10 min, followed by 135°C and 1.274 MPa (13 kg/cm$^2$) for one hour after which the temperature was reduced to 38°C for 20 min whereupon the pressure was reduced to end the cycle.

Other laminates for peel adhesion testing were prepared using standard laminating techniques familiar to those in the art except that an adhesive coated aluminum foil was substituted for one of the glass layers and the glass and interlayer on the other side of the polycarbonate was eliminated.

Values for the various properties presented in Table 1 following were determined according to the following procedures.

The glass transition temperature (Tg) of plasticized PVB was measured using a Rheometric Mechanical Spectrometer which is a rectangular torsion test conducted in a nitrogen atmosphere at a constant frequency (1-hertz) and temperature.

Compatibility of plasticizer and PVB resin as determined by the extent of exudation of the plasticizer from the resin after melt mixing was visually noted by the absence or presence and level of free plasticizer either on the surface of the plasticized resin or in the bowl of the sigma mixer.

Penetration resistance of the glass-polycarbonate-plasticized interlayer laminates was measured by dropping a 2.3 kg steel ball five times from 2.4 m onto the laminate which had been pre-conditioned for two hours at the temperature at which the test was run. The integrity of the sample insofar as the extent, if any, of delamination along the glass cracks between the polycarbonate and interlayer was visually noted after five drops. The term "good integrity" as used in Table 1 following means that some portion of the laminate, such as the edge area, had all components adhered together after testing.

Clarity of the autoclaved laminate as determined by haze level was visually noted.

Stress cracking of the polycarbonate by the plasticizer(s) used in the interlayer was determined at 23°C and 70°C. In this test the stress applied to polycarbonate specimens was incrementally increased to 13.8 MPa while a patch saturated with the plasticizer fluid was applied at the point of maximum stress and the stress noted at which cracking occurred. More specifically, injection molded polycarbonate coupons in the form of beams about 2.54 cm wide were loaded for a specified time, e.g. 10 minutes, and then the patch saturated with the test plasticizer was applied to the point of maximum stress for an additional time depending on the temperature—i.e. 72 hours at 23°C and 8 hours at 70°C.

Peel adhesion-two parallel grooves 4 cm apart were formed lengthwise through the aluminum foil and interlayer. The polycarbonate at one end of the laminate a few cms in from the end was scored and broken perpendicular to the grooves. The outside edge of the aluminum foil and interlayer on each side of the 4 cm strip was cut at the polycarbonate break. The foil, interlayer and cut polycarbonate were then clamped in the test grips of an Instron tensile tester and the force required to separate the foil and interlayer from the polycarbonate along the grooves measured at room temperature. A range of 10 to 30 newtons/cm is desired to provide the optimum balance of impact and delamination resistance in the laminate.

The results obtained are set forth in the following Table 1.

TABLE 1

| Example | Plasticizer | Plasticizer Amount (phr) | Plasticizer Ratio monoester/ polyester | Penetration resistance −10°C | Penetration resistance 0°C | Penetration resistance 23°C | Peel adhesion Newtons/cm |
|---|---|---|---|---|---|---|---|
| 1 | Glycerol tri-ricinoleate[1,5] | 47.5 | — | complete delamination | complete delamination | significant delamination in impact area | 8—9 |
| 2 | Glycerol tri-ricinoleate (GT) and propylene glycol monoricino-leate (PGM)[2,5] | 12.75 \ 30 | 2.4:1 | some delamina-tion-good laminate integrity | some delamina-tion-good laminate integrity | no delamina-tion-good laminate integrity | 15—22[3] |
| 3 | Propylene glycol monoricinoleate (PGM) | 42 | — | significant delamination in impact area good laminate integrity | — | — | 12 |
| 4 | Pentaerythritol monoricinoleate[4] | 45 | — | — | — | — | 12.8 |
| 5 | Glycerol triricin-oleate/pentaery-thritol monoricin-oleate | 15 \ 30 | 2.0:1 | — | — | — | — |

0 133 611

TABLE 1 (continued)

| Example | Plasticizer | Plasticizer Amount (phr) | Ratio monoester/ polyester | Penetration resistance −10°C | 0°C | 23°C | Peel adhesion Newtons/cm |
|---|---|---|---|---|---|---|---|
| 6 | Ethylene glycol monoricinoleate[6] | 45 | | significant delamination in impact area; good laminate integrity | — | — | 13.6 |
| 7 | Glycerol triricin- oleate/ethylene glycol monoricin- oleate | 15<br>30 | 2.0:1 | some delamina- tion in impact area; good lami- nate integrity | — | — | 10.5 |
| 8 | Glycerol mono- ricinoleate | 42.5 | — | — | — | — | 13.0 |
| 9 | Glycerol tri- ricinoleate/ glycerol monoricinoleate | 12.5<br>30.0 | 2.4:1 | complete[7] delamination | — | — | 13.2 |

[1] AA-Standard Grade Castor Oil from Spencer Kellogg.
[2] PGM was Flexricin 9.
[3] Value of 22 obtained with cosmetic (pure) grade of Flexricin 9.
[4] Flexricin 17.
[5] Laminates were 0.6 m by 0.6 m.
[6] Flexricin 15.
[7] Laminates were 10 cm by 15 cm.

0 133 611

TABLE 1 (continued)

| Example | Tg (°C) | Compatibility | Clarity | Stress cracking MPa | |
|---------|---------|---------------|---------|---------------------|---------|
| | | | | 23°C | 70°C |
| 1 | 36—38 | fair | good | None at 13.8 | None at 13.8 |
| 2 | 17.5 | good | good | None at 13.8 | 11.7 |
| 3 | 18 | good | good | None at 13.8 | 6.9 |
| 4 | 30 | fair | fair | None at 13.8 | None at 13.8 |
| 5 | >30°C (estimated) | fair | poor— reddish tinge | — | — |
| 6 | 19 | good | good | None at 13.8 | 6.9 |
| 7 | 23 | good | good | — | — |
| 8 | 26 | poor— (over lubricated) | fair— reddish tinge | None at 13.8 | 10.3 |
| 9 | 26 | poor— (over lubricated) | fair | — | — |

Stress crack performance of the glycerol triricinoleate/ethylene glycol monoricinoleate blend of Example 7 is predicted to be equivalent to that obtained with the blend of Example 2 containing propylene glycol monoricinoleate.

The foregoing data indicates that when the multiester is the sole or principal plasticizer in the plasticized interlayer (Example 1) in accordance with U.S. 4,128,694, though stress crack resistance of the polycarbonate is good, the tendency to delaminate is high and therefore the penetration resistance is poor because of the relatively high value of Tg and low peel adhesion. When the lower molecular weight glycol monoester (Examples 3 and 6) was used alone, Tg was reduced and penetration resistance was improved, but at the expense of stress crack resistance of the polycarbonate at high temperature. However, when only a relatively minor amount (12.5—15 parts) of the multiester was added to the monoester, (Examples 2, and 7) acceptable stress crack resistance was obtained and peel adhesion was significantly increased with respect to the propylene glycol monoricinoleate species of Example 2 without a reduction in Tg and in penetration resistance. This significant increase in peel adhesion and failure of Tg to increase with the addition of the multiester constituent to the monoester constituent was unexpected. The blend containing a monoester of an alcohol having more than two hydroxyl groups, i.e. the pentaerythritol monoricinoleate species of Example 5 and the glycerol monoricinoleate species of Example 9, which are outside the scope of this invention, were deficient in color (Example 5) and compatibility (Example 9).

Though the plasticized PVB sheet of the invention can be formed by slicing from blocks as disclosed in the foregoing Examples, it is preferably formed by extrusion mixing and sheet formation of the interlayer in a slot die.

The monoester glycol component of the plasticizer blend of the invention may comprise blends of monoesters, such as a blend of individual ethylene and propylene glycol monoester constituents.

The preferred embodiment of the present invention is further described with reference to the following examples 10—13 wherein unless otherwise expressed parts and percentages are given on a weight basis.

Example 10

Six 30.5 cm by 30.5 cm by 3.1 cm polycarbonate sheets available under the trademark Lexan were thoroughly washed and dried. The polycarbonate sheets were then rod-coated with a urethane acrylate liquid mixture of (a) 70 parts urethane oligomer available from Thiokol as Uvithane 893; (b) 10 parts tetraethylene glycol diacrylate; (c) 20 parts vinyl pyrrolidone and (d) 1 part per 100 parts of (a) plus (b) plus (c) of diethoxyacetophenone as photoinitiator. Rod coating was achieved by placing an excess of the liquid mixture adjacent one edge of a sheet and then a number 9 grooved coating rod was passed through the mixture to evenly distribute it on the sheet surface at a thickness of about 0.025 mm in that the depth of the rod groove controlled the thickness of the liquid mixture on the sheet. The thus coated sheets were immediately placed on a conveyor support and passed at a line speed of about 6.4 m/min through a Linde Photocure UV Oven containing 4 ultraviolet lamps mounted in tandem, each rated at about 40 watts/cm (100 watts/in). On exiting the oven the mixture was found to be cured to a tough, flexible coating since the coating could be manually bent with the substrate without rupturing. This same procedure was then repeated for each sheet to provide a cured coating on the opposite side. Then 30.5 cm by 30.5 cm by 0.76 mm sheets of Saflex polyvinyl butyral plasticized with 42.75 parts per 100 parts of PVB of a blend containing 30 parts of Flexricin 9 propylene glycol monoricinoleate and 12.75 parts of cosmetic grade castor oil was placed against the cured urethane acrylate film coating and squared on four sides with the underlying substrate.

The coated polycarbonate configuration was then sandwiched between two 30.5 cm by 30.5 cm by 0.63 cm glass sheets and was then prepressed at 551 kPa by passing through the nip of a pair of rotating rubber covered rolls. The thus prepared laminates were then placed in an air autoclave for 2 to 3 hours at pressures incrementally increased as follows: temperature and pressure were raised to 116°C, 1000 kPa and these conditions held for one hour, then dropped to about 40°C and held for 20 min and then the pressure was released.

After lamination, each entire sample was tested for low temperature impact resistance using a modified version of UL 972. The samples were conditioned at minus 10°C for about 1.5—2 h and then the preconditioned samples were placed in a frame where a 2.3 kg steel ball was dropped from 3.05 m five times on each sample. The samples were then visually examined and no delamination of the PVB from either the glass or the coated polycarbonate was observed indicating excellent panel integrity.

Example 11

The foregoing procedure of Example 10 was repeated except that the sample size was reduced to 10.1 cm by 15.2 cm, the urethane acrylate liquid mixture for the coating was Gafgard 233, commercially available from GAF Corp., no photoinitiator was used since curing was by electron beam radiation and testing was done by manually striking each sample five times with a hammer. Curing was under nitrogen via a single pass per side through an electron beam apparatus to give a dosage of 3 megarads per side (beam current of 3 mA, terminal voltage of 150 kV). On checking the samples after low temperature impact no delamination was detected indicating excellent panel integrity.

Example 12

The foregoing procedure of Example 10 was repeated except that the samples were the same size as in Example 2 and instead of the urethane acrylate liquid mixture, the polycarbonate surfaces were rod coated with a 50% solids emulsion of polyvinylidene chloride commercially available from W. R. Grace & Co., Organic Chemicals Division as Daran 820. The emulsion had a specific gravity of 1.252—1.265 and the solids had an average particle size of 0.10 to 0.14 micrometers. The coated substrates were dried in ambient air. On checking the samples after low temperature impact no delamination was detected indicating excellent panel integrity.

Example 13

This is an example to compare performance in the absence of a polyvinylidene chloride or urethane acrylate coating. The foregoing procedure of Example 10 was repeated except that the polycarbonate layer was uncoated, the samples were 0.6 m by 0.6 m and unmodified UL 972 procedure was followed in testing for low temperature delamination i.e., a 2.3 kg steel ball was dropped five times on each sample from a height of 2.4 m. Examination of the impacted samples revealed that some detectable delamination of the PVB from the glass and polycarbonate had occurred.

Coated polyacrylate according to the invention is predicted to be equivalent to polycarbonate in laminates with plasticized PVB sheet.

EP—A—0,133,848, an application having the same priority date as the present application, describes and claims, in a PVB sheet plasticized with a multiester of an alcohol having 2 to 4 hydroxyl groups and a $C_{16}$ to $C_{20}$ unsaturated fatty acid having a hydroxyl group attached to the acid molecule, the improvement which comprises, in combination with such multiester, a monoester of a glycol and such $C_{16}$ to $C_{20}$ unsaturated fatty acid.

While certain specific embodiments of the invention have been described with particularity herein, it will be recognized that various modifications thereof will occur to those skilled in the art. The scope of the invention, therefore, is to be limited solely by the scope of the following claims.

**Claims**

1. A laminate comprising at least one sheet of thermoplastic resin selected from the group consisting of polycarbonate and polyacrylate laminated to a PVB sheet plasticized with a multiester of an alcohol having 2 to 4 hydroxyl groups and a $C_{16}$ to $C_{20}$ unsaturated fatty acid having a hydroxyl group attached to the acid molecule, characterised in that the PVB sheet comprises, in combination with such multiester, an additional plasticizer that is a monoester of a glycol and said $C_{16}$ to $C_{20}$ unsaturated fatty acid.

2. A laminate of Claim 1, wherein the monoester is propylene glycol-1,2 monoricinoleate.

3. A laminate of Claim 1, wherein the monoester is ethylene glycol monoricinoleate.

4. A laminate of any of Claims 1 to 3, wherein the ratio of monoester to multiester is from about 1:1 to about 5:1.

5. A laminate of Claim 4, wherein said ratio is about 2:1.

6. A laminate of any of the preceding claims, wherein the thermoplastic resin is polycarbonate.

7. A laminate of any of the preceding claims, wherein the multiester is present as castor oil.

8. A laminate of any of the preceding claims, that includes at least one sheet of glass laminated to the PVB sheet.

9. A laminate of any of the preceding claims, wherein a layer of polyvinylidene chloride or cured urethane acrylate resin is interposed between the interfacial surfaces of said sheet of polycarbonate or polyacrylate and said PVB sheet.

10. A laminate of Claim 9, wherein the thickness of the interposed layer is 0.013 to 0.13 mm.

**Patentansprüche**

1. Laminat mit mindestens einer Bahn aus einem thermoplastischen Harz ausgewählt aus der Gruppe, die Polycarbonate und Polyacrylate umfaßt, die mit mindestens einer PVB-Bahn, die mit einem Multiester aus einem Alkohol mit 2 bis 4 Hydroxylgruppen und einer ungesättigten $C_{16}$—$C_{20}$-Fettsäure, die eine an das Säuremolekül gebundene Hydroxylgruppe aufweist, weichgemacht ist, verbunden ist, dadurch gekennzeichnet, daß die PVB-Bahn in Kombination mit dem Multiester als zusätzlichen Weichmacher einen Monoester aus einem Glykol und der ungesättigten $C_{16}$—$C_{20}$-Fettsäure enthält.

2. Laminat nach Anspruch 1, dadurch gekennzeichnet, daß es als Monoester Propylenglykol-1,2-monoricinoleat enthält.

3. Laminat nach Anspruch 1, dadurch gekennzeichnet, daß es als Monoester Ethylenglykolmonoricinoleat enthält.

4. Laminat nach einem der Ansprüche 1 bis 3, dadurch gekennzeichnet, daß das Verhältnis von Monoester zu Multiester etwa 1:1 bis etwa 5:1 beträgt.

5. Laminat nach Anspruch 4, dadurch gekennzeichnet, daß das Verhältnis etwa 2:1 beträgt.

6. Laminat nach einem der vorhergehenden Ansprüche, dadurch gekennzeichnet, daß das thermoplastische Harz eine Polycarbonat ist.

11

**0 133 611**

7. Laminat nach einem der vorhergehenden Ansprüche, dadurch gekennzeichnet, daß der Multiester in Form von Rizinusöl vorhanden ist.

8. Laminat nach einem der vorhergehenden Ansprüche, dadurch gekennzeichnet, daß es mindestens eine mit der PVB-Bahn schichtförmig verbundene Glasbahn umfaßt.

9. Laminat nach einem der vorhergehenden Ansprüche, dadurch gekennzeichnet, daß zwischen den Grenzflächen der Bahn aus dem Polycarbonat oder dem Polyacrylat und der PVB-Bahn eine Schicht aus Polyvinylidenchlorid oder einem gehärteten Urethanacrylatharz zwischengeschaltet ist.

10. Laminat nach Anspruch 9, dadurch gekennzeichnet, daß die Dicke der Zwischenschicht 0,013 bis 0,13 mm beträgt.

**Revendications**

1. Stratifié comprenant au moins une feuille d'une résine thermoplastique choisie dans le groupe constitué d'un polycarbonate et d'un polyacrylate stratifié sur une feuille de PVB plastifié avec un multiester d'un alcool ayant deux à quatre groupes hydroxyle et d'un acide gras insaturé en $C_{16}$ à $C_{20}$ ayant un groupe hydroxyle fixé sur la molécule d'acide, caractérisé en ce que la feuille de PVB comprend, en combinaison avec ce multiester, un plastifiant supplémentaire qui est un monoester d'un glycol et de cet acide gras insaturé en $C_{16}$ à $C_{20}$.

2. Stratifié de la revendication 1, dans lequel le monoester est un monoricinoléate de propylène glycol-1,2.

3. Stratifié de la revendication 1, dans lequel le monoester est le monoricinoléate d'éthylène glycol.

4. Stratifiée selon l'une quelconque des revendications 1 à 3, dans lequel le rapport du monoester au multiester est d'environ 1:1 à environ 5:1.

5. Stratifié de la revendication 4, dans lequel ce rapport est d'environ 2:1.

6. Stratifié suivant l'une quelconque des revendications précédentes, dans lequel la résine thermoplastique est un polycarbonate.

7. Stratifié selon l'une quelconque des revendications précédentes, dans lequel le multiester est présent sous forme d'huile de ricin.

8. Stratifié suivant l'une des revendications précédentes, qui comprend au moins une feuille de verre stratifiée sur la feuille de PVB.

9. Stratifié selon l'une quelconque des revendications précédentes, dans lequel une couche de polychlorure de vinylidène ou de résine d'uréthane acrylate durcie est interposée entre les interfaces de cette feuille de polycarbonate ou de polyacrylate et de cette feuille de PVB.

10. Stratifié selon la revendication 9, dans lequel l'épaisseur de la couche interposée est de 0,013 à 0,13 mm.